# EUROPÄISCHE PATENTSCHRIFT

(11) **EP 1 259 405 B1**
(45) Veröffentlichungstag und Bekanntmachung des Hinweises auf die Patenterteilung: **21.06.2006**
(21) Anmeldenummer: 01982145.3
(22) Anmeldetag: 26.09.2001
(51) Int. Cl.: B60S 1/04

(54) **BEFESTIGUNG FÜR EINE SCHEIBENWISCHERANLAGE**
FIXING DEVICE FOR A WINDSCREEN WIPER SYSTEM
FIXATION D'UN SYSTEME D'ESSUIE-GLACE

(30) Priorität: 23.10.2000 DE 10052497; 15.12.2000 DE 10062617
(43) Veröffentlichungstag der Anmeldung: 27.11.2002
(73) Patentinhaber: ROBERT BOSCH GMBH, 70442 Stuttgart (DE)
(72) Erfinder: NEUBAUER, Achim, 76547 Sinzheim-Vormberg (DE); KALCHSCHMIDT, Peter, 76646 Bruchsal Untergromb (DE); MOENCH, Jochen, 76547 Sinzheim (DE); SPONAR, Heiko, 76437 Rastatt (DE)
(74) Vertreter: Gleiss & Grosse
(86) Internationale Anmeldenummer: PCT/DE2001/003693
(87) Internationale Veröffentlichungsnummer: WO 2002/034585

(56) Entgegenhaltungen:
- EP-A- 0 532 384
- WO-A-00/18621
- DE-A- 10 016 086
- DE-A- 19 833 089
- US-A- 5 938 536

## Beschreibung

Die Erfindung betrifft eine Befestigung für eine Scheibenwischeranlage mit den im Oberbegriff des Anspruchs 1 genannten Merkmalen.

### Stand der Technik

Es ist bekannt, Scheibenwischeranlagen, insbesondere für Kraftfahrzeuge, unter Verwendung von schwingungsdämpfenden Elementen durch Verschraubung an der Fahrzeugkarosserie zu befestigen. Die Scheibenwischeranlagen werden im Allgemeinen als vormontierte Baugruppe an die Automobilhersteller zum Einbau in die Kraftfahrzeuge geliefert. Die vormontierte Baugruppe besteht aus einer Platine, die an ihren jeweiligen Enden mit einem entsprechenden Befestigungsauge versehen ist, sowie aus einem Antriebsmotor, der über ein Koppelgestänge mit den an der Platine gelagerten Wischerwellen verbunden ist. Der Antriebsmotor seinerseits ist ebenfalls an der Platine befestigt und mit einem Befestigungsauge zur Befestigung der Scheibenwischeranlage an der Fahrzeugkarosserie versehen. Über die an der Scheibenwischeranlage angeordneten Befestigungsaugen erfolgt durch Verschraubung die Befestigung der Scheibenwischeranlage an der Fahrzeugkarosserie. Zur besseren Montage der Scheibenwischeranlage sind dabei entweder die Muttern oder die Schrauben an der Karosserie des Fahrzeuges angeschweißt. Zwischen der Fahrzeugkarosserie und den Befestigungspunkten der Scheibenwischeranlage werden zur Dämpfung beziehungsweise zur Verhinderung von Schwingungsübertragungen schwingungsdämpfende Elemente, wie Dämpfungsgummis oder dergleichen, angeordnet. Die Befestigungsaugen an der vorgefertigten Scheibenwischeranlage sind so angeordnet, dass sie ein verhältnismäßig großes Dreieck bilden, um somit die Steifigkeit des Systems zu erhöhen. Nachteilig bei der bekannten Befestigungsart der Scheibenwischeranlagen an der Fahrzeugkarosserie ist einerseits der verhältnismäßig hohe manuelle Aufwand zur Montage der Scheibenwischeranlage an der Fahrzeugkarosserie und andererseits der dazu benötigte große Materialaufwand in Form von Muttern, Schrauben, Unterlegscheiben, Dämpfungsgummis und dergleichen. Außerdem wird für die Montage ein entsprechender Freiraum für die Schraubwerkzeuge benötigt. Weiterhin besteht die Gefahr einer ungewollten Lösung beziehungsweise Lockerung der Schraubverbindung durch die während der Fahrt auftretenden Schwingungen. Eine Lockerung der Schraubverbindung zieht zwangsweise eine Beeintrachtigung der Funktion der Scheibenwischeranlage nach sich.

Aus der WO-A-00/18 621 ist eine Befestigung für eine Scheibenwischeranlage an einer Fahrzeugkarosserie gemäß dem Oberbegriff des Anspruchs 1 bekannt.

### Vorteile der Erfindung

Die erfindungsgemäße Befestigung einer Scheibenwischeranlage an einer Fahrzeugkarosserie mit den im Anspruch 1 genannten Merkmalen bietet den Vorteil, dass im Bereich des Festlagers eine genaue Einstellung und Aufrechterhaltung des Wischwinkels gewährleistet werden kann. Weiter wird der Aufwand für die Montage der Scheibenwischeranlage an der Fahrzeugkarosserie sowie die Anzahl der für die Montage benötigten Einzelteile, wie Muttern, Schrauben, Unterlegscheiben, Dämpfungsgummis und dergleichen wesentlich reduziert. Durch das Verkleben der Befestigungsstellen der Scheibenwischeranlage mit jeweils einer an der Fahrzeugkarosserie entsprechend angeordneten Befestigungsstelle (Anbindungsstelle) wird vorteilhaft erreicht, dass eine schnelle und sichere Montage der Scheibenwischeranlage an der Fahrzeugkarosserie erfolgt. Der für eine Verschraubung benötigte Freiraum für die notwendigen Schraubwerkzeuge ist nicht mehr erforderlich. Ein weiterer Vorteil der erfindungsgemäßen Lösung besteht darin, dass der ausgehärtete Klebstoff eine Dämpfungsfunktion übernimmt, wodurch Gummibuchsen oder andere schwingungsdämpfende Elemente entfallen und Materialkosten reduziert werden können.

Vorteilhafte Ausgestaltungen der Erfindung ergeben sich aus den in den Unteransprüchen genannten Merkmalen.

### Zeichnungen

Die Erfindung wird nachfolgend in einem Ausführungsbeispiel anhand der zugehörigen Zeichnungen naher erläutert. Es zeigen:
- Figur 1: eine Draufsicht der erfindungsgemäßen Befestigung einer Scheibenwischeranlage an einer Fahrzeugkarosserie;
- Figur 2: eine Einzelheit X gemäß Figur 1;
- Figur 3: eine Einzelheit Y gemäß Figur 1 und
- Figur 4: eine schematische Darstellung der stoffschlüssigen Verbindung bei verschiedenen Oberflächenformen und Anbindungsstellen.

### Beschreibung des Ausführungsbeispiels

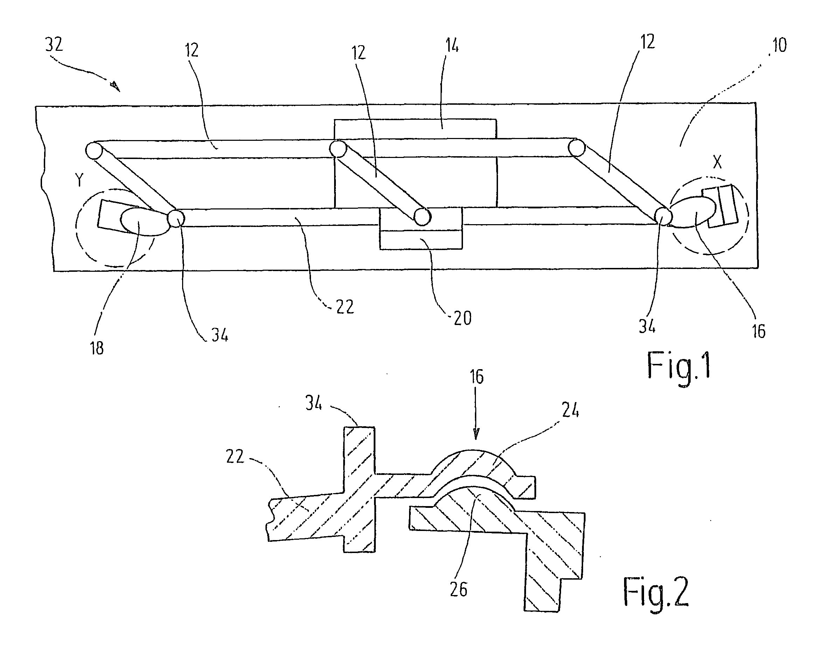

In Figur 1 ist schematisch die Anbindung einer Scheibenwischeranlage 32 an eine Fahrzeugkarosserie 10 dargestellt. Die an sich bekannte Scheibenwischeranlage 32 besteht aus einer Platine 22, die an ihren jeweiligen Enden mit einer entsprechenden Befestigungsstelle 16 und 18 versehen ist. An der Platine 22 ist über eine dritte Befestigungsstelle 20 einerseits ein Antriebsmotor 14 befestigt, andererseits erfolgt über die dritte Befestigungsstelle 20 eine Befestigung der Scheibenwischeranlage 32 mit der Fahrzeugkarosserie 10. Der Antriebsmotor 14 ist über ein Koppelgestänge 12 mit den an der Platine 22 gelagerten Wischerwellen 34 zur Betätigung der Scheibenwischer verbunden. Die Scheibenwischeranlagen 32 werden vormontiert und danach als Baugruppe in das entsprechende Kraftfahrzeug eingebaut.

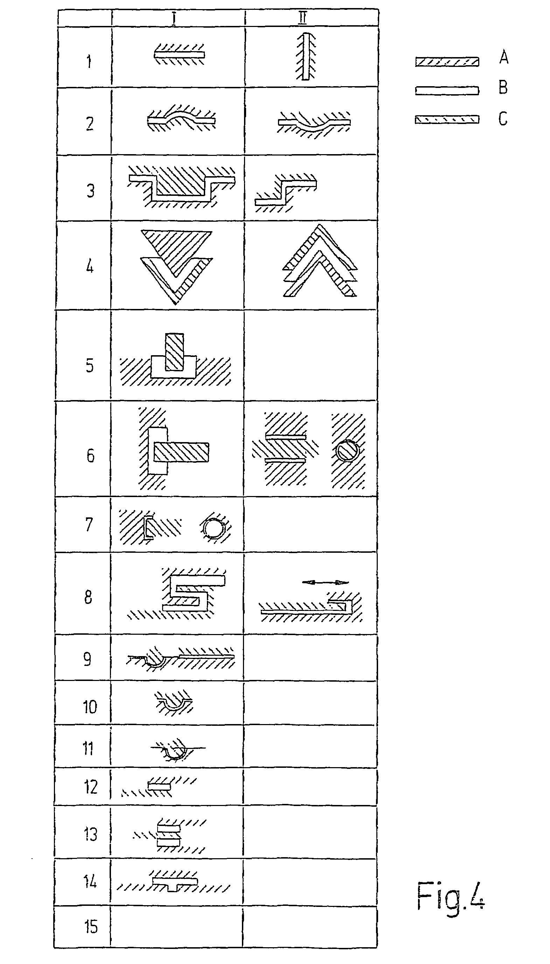

Die Befestigung der Scheibenwischeranlage 32, insbesondere an der Fahrzeugkarosserie 10 von Kraftfahrzeugen, erfolgt erfindungsgemäß dadurch, dass die Befestigungsstellen der Scheibenwischeranlage 32 mit jeweils einer an der Fahrzeugkarosserie 10 entsprechend angeordneten Befestigungsstelle (Anbindungsstelle) verklebt werden. Kleben ist eine stoffschlüssige Verbindung. Um deren Dauerbelastbarkeit zu steigern, ist es sinnvoll, für bestimmte Belastungsrichtungen neben der stoffschlüssigen Verbindung zusätzlich eine formschlüssige Verbindung herzustellen. Für die Verklebung bedeutet das, dass über die Klebschicht vor allem Druckbelastungen übertragen werden sollen. Schäl- und Zugbelastungen der Klebestellen werden durch die entsprechende räumliche Anordnung sowie eine zusätzliche formschlüssige Konstruktion der Verbindung weitestgehend vermieden. In der Tabelle gemäß der Figur 4 sind verschiedene Oberflächenformen und Anbindungsstellen einer Klebeverbindung mit einem zusätzlichen Formschluss auf gelistet.

Die mit der Schraffur A versehenen Werkstücke stellen beispielsweise die Scheibenwischeranlage 32 dar, während die Schraffur C beispielsweise die Fahrzeugkarosserie 10 darstellt. Mit B ist der Klebstoff zwischen den jeweiligen Formteilen dargestelle. In den Spalten I und II sind entsprechend unterschiedliche Anordnungen der Werkstücke veranschaulicht.

In den jeweiligen Zeilen der Tabelle sind unterschiedliche Flächengestalten, unterschiedliche Formen der Anbindung und unterschiedliche Anzahlen von Anbindungsstellen der stoffschlüssigen und formschlüssigen Verbindung von verschiedenen Merkstücken dargestellt. In den Zeilen 1 bis 4 sind unterschiedliche Flächengestaltungen der Werkstücke aufgezeigt. Zeile 1 zeigt eine glatte, Zeile 2 eine runde, eiförmig, konkav/konvexe, Zeile 3 eine eckige und Zeile 4 eine dreieckige Flächengestaltung. In den Zeilen 5 bis 11 sind unterschiedliche Formen der Anbindungsstellen dargestellt. In der Zeile 5 ist das Einbetten eines Werkstückes in ein anderes Werkstück, in Zeile 6 die Verbindung Stift und Bohrung, in Zeile 7 eine Rundverbindung, in Zeile 8 eine Falzverbindung, in Zeile 9 eine Verbindung Welle und Blech, in Zeile 10 eine Verbindung Halbkugel und Kugelkalotte und in Zeile 11 eine Verbindung Kugel und Pfanne dargestellt. In den Zeilen 12 bis 15 ist die Anzahl der Anbindungsstellen dargestellt. In der Zeile 12 ist eine einfache Anbindung, in der Zeile 13 eine doppelte Anbindung, in der Zeile 14 eine dreifach Anbindung dargestellt. Die Zeile 15 steht für eine Mehrfachbindung und ist nicht weiter dargestellt. Die in der Tabelle dargestellten Varianten stellen entsprechend den jeweiligen Bedingungen mögliche Anbindungsvarianten der Befestigungsstellen 16; 18; 20 zwischen einer Scheibenwischeranlage 32 und einer Fahrzeugkarosserie dar.

Als besonders vorteilhaft hat sich erwiesen, dass die erste Befestigungsstelle 16 zwischen der Scheibenwischeranlage 32 und der Fahrzeugkarosserie 10 als Festlager, ohne einen entsprechenden Toleranzausgleich, auszubilden ist, während die zweite Befestigungsstelle 18 mit einem einachsigen Toleranzausgleich und die dritte Befestigungsstelle 20 mit einem zweiachsigen, ebenen Toleranzausgleich ausgebildet wird. Durch den entsprechenden Toleranzausgleich der zweiten Befestigungsstelle 18 und der dritten Befestigungsstelle 20 können eventuell auftretende Fertigungstoleranzen von der Scheibenwischeranlage 32 und der Fahrzeugkarosserie 10 ausgeglichen werden.

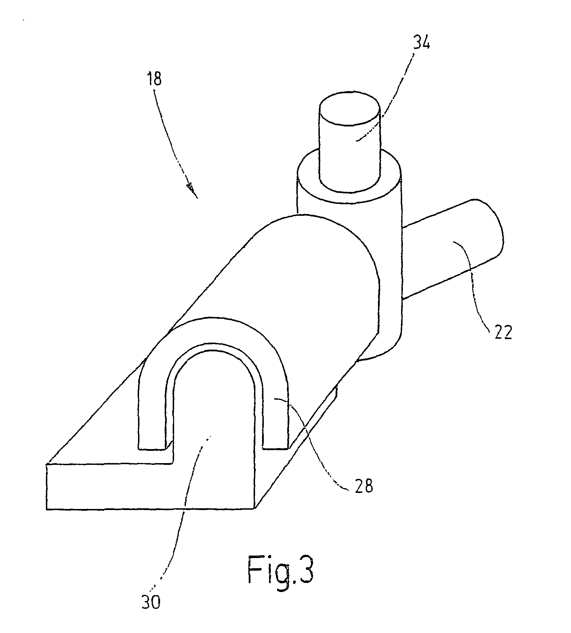

Die Anbindungsstelle der ersten, als Festlager ausgebildeten Befestigungsstelle 16 besteht, wie in Figur 2 dargestellt, aus einer Halbkugel 26, die in formschlüssiger Verbindung mit einer entsprechenden Kugelkalotte 24 steht. Dabei ist vorzugsweise die Befestigungsstelle der Scheibenwischeranlage 10 als Kugelkalotte 24 und die Anbindungsstelle an die Fahrzeugkarosserie 10 als Halbkugel 26 ausgebildet. Die Anbindugsstelle der zweiten, mit einem einachsigen Toleranzausgleich versehenen Befestigungsstelle 18 besteht gemäß Figur 3 aus einem U-förmig mit einer nach unten offenen Seite ausgebildeten Formteil 28, das mit einem entsprechend ausgebildeten U-förmigen Gegenstück 30 miteinander in formschlüssiger Verbindung steht. Dabei ist vorzugsweise die Befestigungsstelle der Scheibenwischeranlage 32 als U-formiges, mit einer nach unten offenen Seite ausgebildetes Formteil 23 und die Anbindungsstelle an die Fahrzeugkarosserie 10 als U-formiges Gegenstück 30 ausgebildet. Die Anbindungsstelle der dritten mit einem zweiachsigen, ebenen Toleranzausgleich ausgebildeten Befestigungsstelle 20 ist als jeweils eine ebene Fläche ausgebildet. Durch die Ausbildung und Gestaltung der einzelnen Befestigungsstellen 16; 18; 20 zwischen der Scheibenwischeranlage 32 und der Fahrzeugkarosserie 10 erfolgt bei der Montage eine genaue Fixierung der Scheibenwischeranlage 32. Die einzelnen Befestigungsstellen 16; 18; 20 zwischen der Scheibenwischeranlage 32 und der Fahrzeugkarosserie 10 können aber auch entsprechend der in der Tabelle aufgezeigten Varianten gestaltet sein. Ebenso ist erfindungsgemäß vorgesehen, eine Scheibenwischeranlage 32 nur mittels zweier Befestigungsstellen, beispielsweise nur durch die Befestigungsstellen 16; 18, an der Fahrzeugkarosserie zu befestigen.

Die erste, als Festlager ausgebildete Befestigungsstelle 16 weist hinsichtlich ihrer Einbaulage die höchste Genauigkeit auf. Diese Genauigkeit ist auch ausschlaggebend für die Einstellung der entsprechenden Wischereiche für die Scheibenwischerblätter und zum pratisen Erreichen der berechneten Wischwinkel unter verschiedenen Bedingungen. Bei üblichen Gleichlauf-Wischeranlagen bewegt sich das Wischblatt zwischen unterem Scheibenrand und der A-Säule des Kraftfahrzeugs. Deshalb wird auf dieser Fahrzeugseite eine höhere Wischwinkelpräzision angestrebt. Aus diesem Grunde wird die erste, als Festlager ausgebildete Befestigungsstelle 16 an der Fahrzeugkarosserie 10 auf der Fahrerseite angeordnet. Die zweite, mit einem einachsigen Toleranzausgleich ausgebildete Befestigungsstelle 18 wird an der Fahrzeugkarosserie 10 in Richtung Beifahrerseite angeordnet, während die dritte, mit einem zweiachsigen ebenen Toleranzausgleich ausgebildete Befestigungsstelle 20 in ungefähr der Mitte zwischen der ersten Befestigungsstelle 16 und der zweiten Befestigungsstelle 18 an der Fahrzeugkarosserie 10 angeordnet wird.

Um die Steifigkeit der Scheibenwischeranlage 32 insgesamt zu erhöhen, werden die Befestigungsstellen 16; 18 ; 20 für die Scheibenwischeranlage 32 an der Fahrzeugkarosserie 10 so angeordnet, dass sie in einer Ebene betrachtet ein Dreieck bilden. Die Steifigkeit der Scheibenwischeranlage 32 ist dabei abhängig von der Größe des zu bildenden Dreiecks zwischen den einzelnen Befestigungsstellen 16; 18; 20. Je größer das zu bildende Dreieck, umso größer ist die Stabilität der Scheibenwischeranlage.

Für die Erstfixierung der Scheibenwischeranlage 32 können bei der Montage in die Klebestellen der Befestigungsstellen 16; 18; 20 zwischen Scheibenwischeranlage 32 und Fahrzeugkarosserie 10 Abstandshalter angeordnet werden, die einerseits die Scheibenwischeranlage in eine vorbestimmte Position bringen und andererseits der Erzielung einer bestimmten Klebstoffdicke dienen. Diese Abstandshalter müssen aus einem schwingungsdämpfenden Werkstoff, beispielsweise aus Elastomer, bestehen, wenn sie nach dem Ausharten des Klebstoffes nicht entfernt werden sollen. Bestehen die Abstandshalter aus einem nicht schwingungsdämpfenden Werkstoff, werden sie nach dem Aushärten des Klebstoffes wieder entfernt.

Zur verklebung der Scheibenwischeranlage 32 mit der Fahrzeugkarosserie 10 wird zwischen den jeweiligen Befestigungsstellen 16; 18; 20 der Scheibenwischeranlage 32 und der Fahrzeugkarosserie 10 ein gummielastischer, auf Polyurethanbasis bestehender einkomponentiger Klebstoff aufgebracht. Der Klebstoff wird dabei vorzugsweise aufgrund der besseren Zugäglich-keit auf den jeweiligen Befestigungsstellen 16; 18; 20 der Scheibenwischeranlage 32 aufgebracht. Außerdem liegen mit diesen Stellen definierte Klebeflächen vor. Bei einem Aufbringen des Klebstoffes auf die Befestigungsstellen der Fahrzeugkarosserie 10, insbesondere auf die dritte, mit einem zweiachsigen ebenen Toleranzausgleich ausgebildete Befestigungsstelle 20, kann es vorkommen, dass sich der Klebstoff, aufgrund der möglichen Verschiebungen der jeweiligen Befestigungsstellen 20 zueinander, nicht oder nur teilweise an der entsprechenden Klebestelle befinden würde. Die Festigkeit der Klebestelle würde dadurch negativ beeinträchtigt werden.

Der Klebstoff wird bei zirka a 60 °C gleichmäßig auf die jeweiligen Befestigungsstellen 16; 18; 20 aufgetragen. Dieses erfolgt durch Einspritzen in die Mulden der entsprechend ausgebildeten Befestigungsstellen oder durch Aufbringen von Dreiecksraupen bei einer ebenen ausgebildeten Befestigungsstelle. Durch die hohe Viskosität des Klebstoffes auch bei Verarbeitungstemperatur kann der Klebstoff auf die jeweiligen Befestigungsstellen 16; 18; 20 aufgebracht und die Scheibenwischeranlage 32 anschließend beim Transport in beliebiger Weise bewegt werden. Die Viskosität ist im Verarbeitungszustand in etwa "zähflüssig", das heißt, die Viskosität ist so, dass sie mit technisch realisierbaren Drücken in den bekannten Dosieranlagen verarbeitbar ist, aber nicht leicht tropft oder schmiert oder sich unter Eigengewicht verformt (Raupenform bleibt konstant). Die Gestaltung und die Größe der jeweiligen Befestigungsstellen 16; 18; 20 und damit der Ellebestellen zwischen der Scheibenwischeranlage 32 und der Fahrzeugkarosserie 10 ergeben sich aus den Maximalbelastungen, die an den Befestigungsstellen auftreten. Die maximalen Kräfte werden dabei bei Blockierung der Wischarme in verschiedenen Lagen ermittelt und aus dem Koordinatensystem des Fahrzeuges in Befestigungskoordinatensysteme gedreht. So kann in oberflächenparallele und dazu senkrechte Kräfte unterschieden und somit Schub- und Zugkräfte ermittelt werden. Mit diesen Kräften und den Festigkeiten des Klebstoffes auf den vorgesehenen lackierten Flächen der Fahrzeugkarosserie 10 werden die notwendigen klebeflächen berechnet. Dabei wird die in zwei Punkten vorhandene dreidimensionale Geometrie der Klebeflächen vernachlässigt. Bei der Auslegung der entsprechenden Klebeflächen werden aber zusätzlich hohe Sicherheitsfaktoren berücksichtigt, um das Ausfallrisiko auch bei extremen Fahrzeugbeanspruchungen und Fahrzeuglebensdauern zu minimieren. Ein weiterer Punkt für die Auslegung und Anordnung der Klebestellen ist die Gewährleistung des Fail-Safe-Verhaltens der Befestigungsstellen. Das bedeutet, dass die Klebeflachengröße der einzelnen Befestigungsstellen 16; 18; 20 zwischen Scheibenwischeranlage 32 und Fahrzeugkarosserie 10 so groß dimensioniert werden, dass bei einer eventuelle Lösung einer Klebeverbindung einer Befestigungsstelle 16 oder 18 oder 20 ein Losen der Klebverbindungen der anderen Befestigungsstellen vermieden wird. Dadurch wird sichergestellt, dass bei einem eventuellen Lösen einer Verbindungsstelle durch die beim Wischen auftretenden Kräfte nicht die anderen Verbindungsstellen abgerissen werden. Ein Abreißen der Scheibenwischeranlage 32 wird somit unter normalen Bedingungen weitestgehend vermieden.

Die niedrigviskose Konsistenz des Klebstoffes ist auch zur Erreichung einer vorbestimmten Stärke des Klebstoffes zwischen den jeweiligen Befestigungsstellen 16; 18; 20 der Scheibenwischeranlage 32 und der Fahrzeugkarosserie 10 maßgebend. Dabei wird von dem Klebstoff gefordert, dass er nach seiner Aushärtung elastisch und schwingungsdämpfend ist. Der Klebstoff wird in einer solchen Stärke zwischen den Befestigungsstellen 16; 18; 20 der Scheibenwischeranlage 32 und Fahrzeugkarosserie 10 aufgetragen, dass der ausgehärtets Klebstoff die Scheibenwischeranlage 32 und Fahrzeugkarosserie 10 schwingungstechnisch voneinander trennt und somit eine enrsprechsnde Dämpfungsfunktion ubernimmt. Dazu ist es esforderlich, die Klebstoffschicht zwischen den jeweiligen Flachen der Befestigungsstellen so anzuordnen, dass keine Berührung der Bauteile der Scheibenwischeranlage 32 mit der Fahrzeugkarosserie 10 erfolgt und somit keine Schwingungen von der Scheibenwischeranlage 32 ins Fahrzeug übertragen werden können. Dadurch entfallen die bisher gebräuchlichen elastischen Dämpfungsglieder, wie Gummibuchsen oder dergleichen.

Der auf Polyurethanbasis bestehende elastische Klebstoff besitzt eine hohe Anfangsfestigkeit, wobei seine Hautbildungszeit kleiner 20 Minuten beträgt. Nach Aushärtung weist der Klebstoff eine Härte von zirka 60 shore (A) auf. Dadurch wird erreicht, dass sich die Lage der eingeklebten Scheibenwischeranlage 32 beim anschließenden Transport auf einem Montageband auch bei auftretenden Vibrationen und Drehungen des Fahrzeugs um die Längsachse nicht mehr verändert-Außerdem wird durch die kurze Hautbildungszeit erreicht, dass das Fahrzeug entsprechend dem Produktionsablauf ohne zusätzliche Stillstandszeiten zur Aushärtung des Klebers nachlackiert werden kann.

Eine weitere Eigenschaft des Klebers besteht darin, dass der Klebstoff wasser-, öl-, tensid-, alkohol-, ozon-, salz- und alterungsbeständig ist. Eine Alterungsbeständigkeit ist notwendig zur Garantie einer hohen Lebensdauer der hergestellten stoffschlüssigen Verbindung zwischen Scheibenwischeranlage 32 und Fahrzeugkarosserie 10. Eine Beständigkeit des Klebstoffes gegenüber Wasser, Ölen, Tensiden, Alkohol, Ozon und Salzen ist ebenfalls erforderlich, da der Klebstoff mit diesen Stoffen in berührung gelangen kann. Dabei wurde bei der Gestaltung der einzelnen Befestigungsstellen 16; 18; 20 zwischen der Scheibenwischeranlage 32 und Fahrzeugkarosserie 10 darauf geachtet, dass flüssige Medien ablaufen können und somit keinen Dauerkontakt zum Klebstoff und zur Klebstoffstelle haben. Durch die Vermeidung eines Dauerkontaktes der flüssigen Medien mit dem Klebstoff wird eine Beeinträchtigung der Klebstoffstellen weitestgehend ausgeschlossen, wodurch die Lebensdauer der Klebverbindung verlängert wird. Der verwendete Klebstoff muss außerdem silikonfrei, frei von Giftstoffen, umweltverträglich, gesundheitlich unbedenklich und gefahrlos aufbringbar sein, um den Anforderungen an den Umweltschutz gerecht zu werden.

Bei einer eventuell notwendigen Auswechselung der Scheibenwischeranlage 32 muss eine Demontage der Scheibenwischeranlage 32 so erfolgen können, dass keine Schäden an den jeweiligen Befestigungsstellen 16; 18; 20 und an der Fahrzeugkarosserie 10 auftreten. Das bedeutet, dass die stoffschlüssigen Klebverbindungen zwischen den jeweiligen Befestigungsstellen 16; 18; 20 der Scheibenwischeranlage 32 und der Fahrzeugkarosserie 10 lösbar sein müssen. Die Trennung erfolgt mit Hilfe eines vibrierenden Messers mit abgewinkelter Klinge, das zwischen den jeweiligen Befestigungsstellen 16; 13; 20 der Scheibenwischeranlage 32 und der Fahrzeugkarosserie 10 geführt wird. Solche Werkzeuge sind in leder Werkstatt vorhanden, um geklebte Windschutzscheiben von der Fahrzeugkarosserie lösen zu können. Ein neues Verkleben der Schezbenwischeranlage 32 kann problemlos auf den Kleberesten der zuvor gelosten Verbindungsstellen erfolgen.

Die Montage der Scheibenwischeranlage 32 an die Fahrzeugkarosserie 10 erfolgt üblicherweise mittels einer Taktstraße oder eines Montagebandes. Durch die Ausgestaltung der einzelnen Befestigungsstellen 16; 18; 20 zwischen der Scheibenwischeranlage 32 und der Fahrzeugkarosserie 10 mit den entsprechenden Freiheitsgraden beziehungsweise Fixpunkten ist es möglich, die Montage mittels eines Einarmroboters durchzuführen, da eine Fixierung der Scheibenwischeranlage 32 an der Fahrzeugkarosserie 10 problemlos möglich ist. Außerdem kann durch den Roboter der Klebstoff einerseits problemlos auf die entsprechende Verarbeitungstemperarur von zirka 60 °C aufgeheizt und auf die Befestigungsstellen der Scheibenwischeranlage 32 aufgebracht werden. Durch den Einsatz eines Roboters wird auch eine Berührung zwischen Mensch und Kleber während der Montage der Scheibenwischeranlage 32 vermieden. Zur schnelleren Aushärtung des Klebers können zusätzlich noch spezielle Systeme, wie beispielsweise ein Booster-System, zum Einsatz gelangen. Bei der anschließenden Montage der Wischerhebel muss beachtet werden, dass die Montage erst nach ausreichender Aushärtungszeit, das heißt nach einer Hautbildung des Klebstoffes, erfolgen kann.

Die erfindungsgemäße Befestigung von Scheibenwischeranlagen an eine Fahrzeugkarosserie lässt sich für alle an einem Fahrzeug vorhandenen Scheibenwischeranlagen durchführen. Die erfindungsgemäße Lösung ist somit einsetzbar für Front-, Heck-, Scheinwerfer- und Spiegelscheiben-Wischeranlagen. Dabei kann die Scheibenwischeranlane entsprechend ihrer Bauart als Ein-oder Zweiarmanlage mit oder ohne Hubsteuerung, Ein-oder Zweimotorenanlagen in Gleich- oder Gegenlauf ausgeführt werden.

Der Vorteil der erfindungsgemäßen Befestigung liegt vor allem in der einfachen Montage, der sicheren Befestigung, der Verringerung der benötigten Einzelteile und des benötigten Montagefreiraumes sowie in der Reduzierung der Kosten insgesamt.

## Patentansprüche

1. Befestigung für eine Scheibenwischeranlage (32) an einer Fahrzeugkarosserie (10), insbesondere für Kraftfahrzeuge, wobei die Scheibenwischeranlage (32) aus einer vorgefertigten Baugruppe mit wenigstens einer daran angeordneten Befestigungsstelle (16, 18, 20) besteht, die mit jeweils einer an der Fahrzeugkarosserie (10) entsprechend angeordneten Befestigungsstelle (Anbindungsstelle) verklebt ist, **dadurch gekennzeichnet, dass** eine erste Befestigungsstelle (16) zwischen der Scheibenwischeranlage (32) und der Fahrzeugkarosserie (10) als Festlager ohne einen entsprechenden Toleranzausgleich und eine zweite Befestigungsstelle (18) mit einem einachsigen Toleranzausgleich ausgebildet ist.

2. Befestigung nach Anspruch 1, **dadurch gekennzeichnet, dass** eine dritte Befestigungsstelle (20) mit einem zweiachsigen ebenen Toleranzausgleich ausgebildet ist.

3. Befestigung nach einem der vorhergehenden Ansprüche, **dadurch gekennzeichnet, dass** die erste, als Festlager ausgebildete Befestigungsstelle (16) aus einer miteinander in formschlussiger Verbindung stehenden Halbkugel (26) mit einer entsprechenden Kugelkalotte (24) besteht, wobei vorzugsweise die Befestigungsstelle der Scheibenwischeranlage (10) als Kugelkalotte (24) und die Anbindungsstelle an die Fahrzeugkarosserie (10) als Halbkugel (26) ausgebildet ist.

4. Befestigung nach einem der vorhergehenden Ansprüche, **dadurch gekennzeichnet, dass** die zweite, mit einem einachsigen Toleranzausgleich ausgebildete Befestigungsstelle (18) aus einem miteinander in formschlüssiger Verbindung stehenden, U-förmig mit einer nach unten offenen Seite ausgebildeten Formstück (28) mit einem entsprechend ausgebildeten U-förmigen Gegenstück (30) besteht, wobei vorzugsweise die Befestigungsstelle der Scheibenwischeranlage (32) als U-förmiges, mit einer nach unten offenen Seite ausgebildetes Formstück (28) und die Anbindungsstelle an die Fahrzeugkarosserie (10) als U-förmiges Gegenstück (30) ausgebildet ist.

5. Befestigung nach einem der vorhergehenden Ansprüche 2 bis 4, **dadurch gekennzeichnet, dass** die dritte, mit einem zweiachsigen ebenen Toleranzausgleich ausgebildete Befestigungsstelle (20) als jeweils eine ebene Flache ausgebildet ist.

6. Befestigung nach einem der vorhergehenden sprüche 2 bis 5, **dadurch gekennzeichnet, dass** die erste, als Festlager ausgebildete Befestigungsstelle (16) an der Fahrzeugkarosserie (10) möglichst nah an der Wischerwelle (34) des fahrerseitigen Wischarms, die zweite, mit einem einachsigen Toleranzausgleich ausgebildete Befestigungsstelle (18) an der Fahrzeugkarosserie (10) möglichst nah an der Wischerwelle (34) des beifahrerseitigen Wischarms und die dritte, mit einem zweiachsigen ebenen Toleranzausgleich ausgebildete Befestigungsstelle (20) möglichst nah im Bereich der Motoraufhängung an der Fahrzeugkarosserie (10) angeordnet ist.

7. Befestigung nach einem der vorhergehenden Ansprüche 2 bis 6, **dadurch gekennzeichnet, dass** die Befestigungsstellen (16; 18; 20) für die Scheibenwischeranlage (32) an der Fahrzeugkarosserie (10) so angeordnet sind, dass sie in einer Ebene betrachtet ein möglichst großes Kraftdreieck bilden.

8. Befestigung nach einem der vorhergehenden Ansprüche, **dadurch gekennzeichnet, dass** zur Erzielung einer vorbestimmten Klebstoffdicke zwischen den jeweiligen Befestigungsstellen (16; 18; 20) der Scheibenwischeranlage (32) und der Fahrzeugkarosserie (10) wenigstens ein Abstandshalter angeordnet ist.

9. Befestigung nach Anspruch 8, **dadurch gekennzeichnet, dass** der Abstandshalter aus einem schwingungsdämpfenden Werkstoff besteht.

10. Befestigung nach Anspruch 8, **dadurch gekennzeichnet, dass** der Abstandshalter nach dem Aushärten des Klebstoffes entfernt wird.

11. Befestigung nach Anspruch 1 bis 7, **dadurch gekennzeichnet, dass** bei der Verwendung eines Klebstoffes mit hoher Viskosität kein Abstandshalter benötigt wird.

12. Befestigung nach einem der vorhergehenden Ansprüche, **dadurch gekennzeichnet, dass** der zwischen den jeweiligen Befestigungsstellen (16; 18; 20) der Scheibenwischeranlage (32) und der Fahrzeugkarosserie (10) aufzubringende Klebstoff ein gummielastischer, auf Polyurethanbasis bestehender einkomponentiger Klebstoff ist.

13. Befestigung nach einem der vorhergehenden Ansprüche, **dadurch gekennzeichnet, dass** der Klebstoff vorzugsweise an den jeweiligen Befestigungsstellen (16; 18; 20) der Scheibenwischeranlage (32) aufgetragen wird.

14. Befestigung nach einem der vorhergehenden Ansprüche, **dadurch gekennzeichnet, dass** der Klebstoff bei Verarbeitungstemperatur im Verarbeitungszustand eine hohe Viskosität aufweist, seine Hautbildungszeit kleiner 20 Minuten beträgt, eine hohe Anfangsfestigkeit und nach der Aushärtung eine Harte von zirka 60 shore (A) aufweist.

15. Befestigung nach einem der vorhergehenden Ansprüche, **dadurch gekennzeichnet, dass** der Klebstoff wasser-, öl-, tensid-, alkohol-, ozon-, salz- und alterungsbeständig ist.

16. Befestigung nach einem der vorhergehenden Ansprüche, **dadurch gekennzeichnet, dass** der Klebstoff nach seiner Aushärtung elastisch und schwingungsdämpfend ist.

17. Befestigung nach einem der vorhergehenden Ansprüche, **dadurch gekennzeichnet, dass** der Klebstoff silikonfrei, umweltverträglich und gesundheitsunschädlich ist.

18. Befestigung nach einem der vorhergehenden Ansprüche, **dadurch gekennzeichnet, dass** der Klebstoff in einer solchen Stärke zwischen den jeweiligen Befestigungsstellen (16; 18; 20) der Scheibenwischeranlage (32) und der Fahrzeugkarosserie (10) aufgebracht wird, dass die Scheibenwischeranlage (32) und die Fahrzeugkarosserie (10) schwingungstechnisch voneinander getrennt sind.

19. Befestigung nach einem der vorhergehenden Ansprüche, **dadurch gekennzeichnet, dass** die stoffschlüssigen Klebverbindungen zwischen den jeweiligen Befestigungsstellen (16; 18; 20) der Scheibenwischeranlage (32) und der Fahrzeugikarcsserie (10) lösbar sind.

20. Befestigung nach einem der vorhergehenden Ansprüche, **dadurch gekennzeichnet, dass** die stoffschlüssigen Klebverbindungen durch ein vibrierendes Messer mit abgewinkelter Klinge lösbar sind.

21. Befestigung nach Anspruch 20, **dadurch gekennzeichnet, dass** auf einer mittels vibrierenden Messers gelösten Klebverbindung eine erneute verklebung erfolgen kann.

22. Befestigung nach einem der vorhergehenden Ansprüche, **dadurch gekennzeichnet, dass** die KlebstoffSchicht zwischen den jeweiligen Flächen der Befestigungsstellen so angeordnet ist, dass keine Berührung der Bauteile der Scheibenwischeranlage (32) mit der Fahrzeugkarosserie (10) erfolgt.

23. Befestigung nach einem der vorhergehenden Ansprüche, **dadurch gekennzeichnet, dass** die Klebeflächengröße der einzelnen Befestigungsstellen (16; 18; 20) zwischen Scheibenwischeranlage (32) und Fahrzeugkarosserie (10) so groß dimensioniert werden, dass bei einer eventuellen Lösung einer Klebeverbindung einer Befestigungsstelle (16 oder 18 oder 20) ein Losen der Klebverbindungen der anderen Befestigungsstellen vermieden wird.

24. Befestigung nach einem der vorhergehenden Ansprüche, **dadurch gekennzeichnet, dass** die Befestigungsstellen (16; 16; 20) zwischen der Scheibenwischeranlage (32) und der Fahrzeugkarosserie (10) so ausgebildet und angeordnet sind, dass Zug- und Schalbelastungen der Klebschicht vermieden werden;

25. Befestigung nach einem der vorhergehenden Ansprüche, **dadurch gekennzeichnet, dass** die Scheibenwischeranlage (32) eine Front- und/oder Heck- und/oder Scheinwerfer- und/oder Spiegelscheiben-Wischeranlage ist.

## Claims

1. Device for fixing a windscreen wiper system (32) to a vehicle body (10), in particular for motor vehicles, the windscreen wiper system (32) comprising a premanufactured subassembly with at least one fixing point (16, 18, 20) which is arranged thereon and is adhesively bonded to a respective fixing point (connecting point) correspondingly arranged on the vehicle body (10), **characterized in that** a first fixing point (16) between the windscreen wiper system (32) and the vehicle body (10) is designed as a fixed bearing without a corresponding tolerance compensation and a second fixing point (18) is designed with a tolerance compensation about one axis.

2. Fixing device according to Claim 1, **characterized in that** a third fixing point (20) is designed with a planar tolerance compensation about two axes.

3. Fixing device according to one of the preceding claims, **characterized in that** the first fixing point (16), which is designed as a fixed bearing, comprises a hemisphere (26) with a corresponding universal ball joint (24), which hemisphere and universal ball joint are in form-fitting connection with each other, the fixing point of the windscreen wiper system (10) preferably being designed as the universal ball joint (24) and the connecting point to the vehicle body (10) being designed as the hemisphere (26).

4. Fixing device according to one of the preceding claims, **characterized in that** the second fixing point (18), which is designed with a tolerance compensation about one axis, comprises a shaped piece (28), which is of U-shaped design with a downwardly open side, with a correspondingly designed, U-shaped mating piece (30), which shaped piece and mating piece are in form-fitting connection with each other, the fixing point of the windscreen wiper system (32) preferably being designed as the U-shaped piece (28) formed with a downwardly open side, and the connecting point to the vehicle body (10) being designed as the U-shaped mating piece (30).

5. Fixing device according to one of the preceding Claims 2 to 4, **characterized in that** the third fixing point (20), which is designed with a planar tolerance compensation about two axes, is designed as a planar surface in each case.

6. Fixing device according to one of the preceding Claims 2 to 5, **characterized in that** the first fixing point (16), which is designed as a fixed bearing, is arranged on the vehicle body (10) as close as possible to the wiper shaft (34) of the wiper arm on the driver's side, the second fixing point (18), which is designed with a tolerance compensation about one axis, is arranged on the vehicle body (10) as close as possible to the wiper shaft (34) of the wiper arm on the front passenger's side, and the third fixing point (20), which is designed with a planar tolerance compensation about two axes, is arranged on the vehicle body (10) as close as possible to the region of the engine mounting.

7. Fixing device according to one of the preceding Claims 2 to 6, **characterized in that** the fixing points (16; 18; 20) for the windscreen wiper system (32) are arranged on the vehicle body (10) in such a manner that they form the largest possible triangle of forces, as viewed in one plane.

8. Fixing device according to one of the preceding claims, **characterized in that** at least one spacer is arranged to obtain a predetermined adhesive thickness between the respective fixing points (16; 18; 20) of the windscreen wiper system (32) and the vehicle body (10).

9. Fixing device according to Claim 8, **characterized in that** the spacer is composed of a vibration-damping material.

10. Fixing device according to Claim 8, **characterized in that** the spacer is removed after the adhesive has cured.

11. Fixing device according to Claims 1 to 7, **characterized in that**, when an adhesive with a high viscosity is used, a spacer is not required.

12. Fixing device according to one of the preceding claims, **characterized in that** the adhesive which is to be applied between the respective fixing points (16; 18; 20) of the windscreen wiper system (32) and the vehicle body (10) is an elastomeric, single-component adhesive based on polyurethane.

13. Fixing device according to one of the preceding claims, **characterized in that** the adhesive is preferably applied to the respective fixing points (16; 18; 20) of the windscreen wiper system (32).

14. Fixing device according to one of the preceding claims, **characterized in that** the adhesive has a high viscosity in the processing state at the processing temperature, its skin-forming time is less than 20 minutes, and it has a high initial strength and, after curing, a hardness of circa 60 Shore (A).

15. Fixing device according to one of the preceding claims, **characterized in that** the adhesive is resistant to water, oil, surfactants, alcohol, ozone, salt and ageing.

16. Fixing device according to one of the preceding claims, **characterized in that** the adhesive is elastic and damps vibrations after it has cured.

17. Fixing device according to one of the preceding claims, **characterized in that** the adhesive is free from silicone, is environmentally compatible and is not harmful to health.

18. Fixing device according to one of the preceding claims, **characterized in that** the adhesive is applied between the respective fixing points (16; 18; 20) of the windscreen wiper system (32) and the vehicle body (10) in such a thickness that the windscreen wiper system (32) and the vehicle body (10) are separated from each other in terms of vibration.

19. Fixing device according to one of the preceding claims, **characterized in that** the adhesive connections, which form a cohesive material joint, between the respective fixing points (16; 18; 20) of the windscreen wiper system (32) and the vehicle body (10) are releasable.

20. Fixing device according to one of the preceding claims, **characterized in that** the adhesive connections, which form a cohesive material joint, can be released by a vibrating knife with an angled blade.

21. Fixing device according to Claim 20, **characterized in that** renewed adhesive bonding can take place on an adhesive connection which has been released by means of a vibrating knife.

22. Fixing device according to one of the preceding claims, **characterized in that** the adhesive layer between the respective surfaces of the fixing points is arranged in such a manner that the components of the windscreen wiper system (32) are not in contact with the vehicle body (10).

23. Fixing device according to one of the preceding claims, **characterized in that** the size of the adhesive surfaces of the individual fixing points (16; 18; 20) between windscreen wiper system (32) and vehicle body (10) are dimensioned to be of such a size that, should an adhesive connection of a fixing point (16 or 18 or 20) possibly be released, release of the adhesive connections of the other fixing points is avoided.

24. Fixing device according to one of the preceding claims, **characterized in that** the fixing points (16; 18; 20) between the windscreen wiper system (32) and the vehicle body (10) are designed and arranged in such a manner that tensile and peeling loads of the adhesive layer are avoided.

25. Fixing device according to one of the preceding claims, **characterized in that** the windscreen wiper system (32) is a front and/or rear and/or headlight and/or mirror glass wiper system.

## Revendications

1. Fixation d'une installation d'essuie-glace (32) à une carrosserie de véhicule (10), notamment de véhicule automobile, l'installation d'essuie-glace (32) étant composée d'un ensemble préassemblé comprenant au moins un point de fixation (16, 18, 20) collé à un point de fixation (point de liaison) correspondant de la carrosserie (10) du véhicule,
**caractérisée par**
un premier point de fixation (16) entre l'installation d'essuie-glace (32) et la carrosserie du véhicule (10) en forme d'appui fixe sans compensation de tolérances et un second point de fixation (18) ayant une compensation de tolérances suivant un axe.

2. Fixation selon la revendication 1,
**caractérisée par**
un troisième point de fixation (20) ayant une compensation de tolérances plane suivant deux axes.

3. Fixation selon l'une quelconque des revendications précédentes,
**caractérisée en ce que**
le premier point de fixation (16) est réalisé comme appui fixe composé d'une demi-sphère (26) en liaison de forme avec une calotte sphérique (24) correspondante et de préférence le point de fixation de l'installation d'essuie-glace (10) est constitué par la calotte sphérique (24) et le point de fixation à la carrosserie (10) en forme de demi-sphère (26).

4. Fixation selon l'une des revendications précédentes,
**caractérisée en ce que**
le second point de fixation (18) ayant une compensation de tolérances suivant un axe se compose d'une pièce de forme (28) en U avec un côté ouvert vers le bas en liaison de forme avec une pièce complémentaire (30) en forme de U correspondante,
et de préférence le point de fixation de l'installation d'essuie-glace (32) est une pièce de forme (28) en U, ayant un côté ouvert vers le bas et le point de fixation à la carrosserie du véhicule (10) est réalisé comme pièce complémentaire (30) en forme de U.

5. Fixation selon l'une des revendications 2 à 4,
**caractérisée en ce que**
le troisième point de fixation (20), réalisé avec une compensation de tolérances dans un plan suivant deux axes, est réalisé chaque fois sous la forme d'une surface plane.

6. Fixation selon les revendications 2 à 5,
**caractérisée en ce que**
le premier point de fixation (16) en forme d'appui fixe est prévu sur la carrosserie (10) du véhicule aussi près que possible de l'axe d'essuie-glace (34) du bras d'essuie-glace du côté conducteur, le second point de fixation (18) à la carrosserie du véhicule (10) réalisé avec une compensation de tolérances selon un axe, étant aussi près que possible de l'axe d'essuie-glace (34) du bras du côté passager et le troisième point de fixation (20) réalisé pour une compensation des tolérances, sous une forme plane, suivant deux axes, est aussi près que possible au niveau de la suspension du moteur à la carrosserie (10) du véhicule.

7. Fixation selon l'une des revendications 2 à 6,
**caractérisée en ce que**
les points de fixation (16, 18, 20) de l'installation d'essuie-glace (32) à la carrosserie (10) du véhicule sont disposés pour que dans le plan qui les contient ils forment un triangle de sustentation aussi grand que possible.

8. Fixation selon l'une des revendications précédentes,
**caractérisée en ce que**
pour arriver à une épaisseur de collage prédéfinie entre les points de fixation respectifs (16, 18, 20) de l'installation d'essuie-glace (32) et de la carrosserie du véhicule (10) on prévoit au moins un organe d'écartement.

9. Fixation selon la revendication 8,
**caractérisée en ce que**
l'organe d'écartement est en une matière amortissant les vibrations.

10. Fixation selon la revendication 8,
**caractérisée en ce que**
l'organe d'étranglement est enlevé après durcissement d'un agent adhésif.

11. Fixation selon les revendications 1 à 7,
**caractérisée en ce que**
dans le cas de l'utilisation d'un agent adhésif à forte viscosité on n'utilise pas d'organe d'écartement.

12. Fixation selon l'une des revendications précédentes,
**caractérisée en ce que**
l'agent adhésif à placer entre les points de fixation respectifs (16, 18, 20) de l'installation d'essuie-glace (32) et la carrosserie (16) du véhicule est un agent adhésif à un composant, à base de polyuréthane, ayant l'élasticité du caoutchouc.

13. Fixation selon l'une des revendications précédentes,
**caractérisée en ce que**
l'agent adhésif est appliqué de préférence aux points de fixation (16, 18, 20) de l'installation d'essuie-glace (32).

14. Fixation selon l'une des revendications précédentes,
**caractérisée en ce que**
l'agent adhésif présente une viscosité élevée à la température de travail et à l'état dans lequel l'agent adhésif est travaillé, son temps de formation d'une pellicule est inférieur à 20 minutes, sa résistance aux chocs est élevée et le produit durcit à une dureté d'environ 60 shores (A).

15. Fixation selon l'une des revendications précédentes,
**caractérisée en ce que**
l'agent adhésif résiste à l'eau, à l'huile, aux agents tensioactifs, à l'alcool, à l'ozone, aux sels et au vieillissement.

16. Fixation selon l'une des revendications précédentes,
**caractérisée en ce qu'**
après sa prise, l'agent adhésif est élastique et amortit les vibrations.

17. Fixation selon l'une des revendications précédentes,
**caractérisée en ce que**
l'agent adhésif ne contient pas de silicone, est écologique, et inoffensif pour la santé.

18. Fixation selon l'une des revendications précédentes,
**caractérisée en ce que**
l'agent adhésif est appliqué à une épaisseur telle entre les points de fixation respectifs (16, 18, 20) de l'installation d'essuie-glace (22) et la carrosserie du véhicule (10) pour que l'installation d'essuie-glace (32) et la carrosserie (10) du véhicule soient isolées l'une de l'autre du point de vue des vibrations.

19. Fixation selon l'une des revendications précédentes,
**caractérisée en ce que**
les liaisons adhésives par la matière entre les points de fixation respectifs (16, 18, 20) de l'installation d'essuie-glace (32) et de la carrosserie (10) du véhicule sont détachables.

20. Fixation selon l'une des revendications précédentes,
**caractérisée en ce que**
les liaisons adhésives par la matière peuvent être ouvertes par un couteau vibrant à lame recourbée.

21. Fixation selon la revendication 20,
**caractérisée en ce qu'**
on peut effectuer un nouveau collage d'une liaison collée ouverte à l'aide d'un couteau vibrant.

22. Fixation selon l'une des revendications précédentes,
**caractérisée en ce que**
la couche d'agent adhésif est prévue entre les surfaces de fixation respectives pour qu'il n'y ait pas de contact entre les pièces de l'installation d'essuie-glace (32) et de la carrosserie (10).

23. Fixation selon l'une des revendications précédentes,
**caractérisée en ce que**
la taille de la surface d'adhésif des différents points de fixation (16, 18, 20) entre l'installation d'essuie-glace (32) et la carrosserie (10) du véhicule est dimensionnée suffisamment pour qu'en cas d'éventuels détachements d'une liaison collée d'un point de fixation (16) ou (18) ou (20), on évite que les liaisons collées des autres points de fixation se détachent.

24. Fixation selon l'une des revendications précédentes,
**caractérisée en ce que**
les points de fixation (16, 18, 20) entre l'installation d'essuie-glace (32) et la carrosserie (10) du véhicule sont réalisés et disposés pour éviter toute contrainte de traction ou de cisaillement de la couche d'agent adhésif.

25. Fixation selon l'une des revendications précédentes,
**caractérisée en ce que**
l'installation d'essuie-glace (32) est l'installation d'essuie-glace du pare-brise et/ou de la vitre arrière et/ou des projecteurs et/ou des rétroviseurs.
